Europäisches Patentamt

European Patent Office

Office européen des brevets

(19)

(11) Numéro de publication : **0 331 571 B1**

(12)

# FASCICULE DE BREVET EUROPEEN

(45) Date de publication du fascicule du brevet :
**26.08.92 Bulletin 92/35**

(51) Int. CI.⁵ : **F16L 11/08**

(21) Numéro de dépôt : **89400545.3**

(22) Date de dépôt : **28.02.89**

(54) **Tube comportant des couches composites à module d'élasticité différent.**

(30) Priorité : **02.03.88 FR 8802560**

(43) Date de publication de la demande :
**06.09.89 Bulletin 89/36**

(45) Mention de la délivrance du brevet :
**26.08.92 Bulletin 92/35**

(84) Etats contractants désignés :
**BE DE ES GB GR IT NL**

(56) Documents cités :
EP-A- 244 048
DE-A- 3 008 808
FR-A- 1 410 263
FR-A- 2 272 321
US-A- 3 107 698
US-A- 3 579 402
US-A- 4 273 160
US-A- 4 515 737

(73) Titulaire : **INSTITUT FRANCAIS DU PETROLE**
**4, Avenue de Bois Préau**
**F-92502 Rueil-Malmaison (FR)**
Titulaire : **AEROSPATIALE**
**37, Boulevard de Montmorency**
**F-75016 Paris (FR)**

(72) Inventeur : **Odru, Pierre**
**7, rue Pablo Picasso**
**F-94120 Fontenay Sous Bois (FR)**
Inventeur : **Sparks, Charles**
**19 bis, rue Pasteur**
**F-78110 Le Vesinet (FR)**
Inventeur : **Auberon, Marcel**
**Résidence Orion 14, allée du Passen**
**F-33160 Le Maillan (FR)**
Inventeur : **Behar, Jacques**
**5, rue Thomas Edison**
**F-33160 Saint Medard en Jalles (FR)**

## Description

La présente invention concerne une nouvelle structure de tube en matériau composite résistant aux hautes pressions. Les tubes selon l'invention ont par rapport aux tubes enseignés dans l'art antérieur, soit une épaisseur et un poids moindres à pression de service égale, soit une pression admissible supérieure à épaisseur égale.

L'invention propose en outre des exemples de tubes économiquement optimisés.

Par matériau composite, il faut entendre un matériau constitué à partir de fibres parallèles, telles des fibres de verre type E ou R, des fibres de carbone, des fibres aramide type Kevlar 29 ou Kevlar 49 (marques déposées par Dupont de Nemours) enrobées dans une matrice, telle une matière thermoplastique ou thermodurcissable, par exemple une résine époxy. Cette matrice adhère aux fibres.

L'invention s'applique, notamment, à la réalisation de tubes pour le transfert ou le stockage de fluides sous pression, tels que l'eau ou les hydrocarbures.

Plus particulièrement, les tubes selon l'invention sont bien adaptés pour être utilisés dans les opérations de recherche et d'exploitation pétrolière en mer, par exemple comme lignes de sécurité de colonnes montantes ou descendantes reliant le fond de la mer et un support de surface, tel qu'une plate-forme de forage ou d'exploitation, ou tel qu'une bouée de subsurface.

Ces colonnes sont couramment désignées par leur appellation anglaise de "Riser".

Dans le présent texte on entend par mono-couche composite une juxtaposition et éventuellement une superposition de fibres parallèles entre elles enrobées dans un matrice. Dans le cas d'un tube ces fibres sont enroulées sous un même angle par rapport à l'axe du tube.

Par couche composite on entend, soit une monocouche, soit une juxtaposition et éventuellement une superposition de fibres, suivant deux directions symétriques par rapport à un axe, ces fibres étant enrobées dans une matrice. Dans le cas d'un tube les fibres sont enroulées sous deux angles opposés par rapport à l'axe du tube.

Par couche composite équilibrée on entend une couche comportant des fibres disposées suivant deux directions, avec une répartition égale des fibres dans ces deux directions.

La matrice adhère aux fibres. Lorsqu'un tube est composé de plusieurs couches composites, la matrice forme un milieu continu à travers ces fibres auxquelles elle adhère, rendant le tube rigide. Dans la suite de ce texte, sauf spécification contraire, le terme couche désignera implicitement une couche composite.

L'invention consiste notamment à enrouler sensiblement circonférentiellement sur un tube initial un matériau composite présentant un module d'élasticité circonférentiel plus élevé que celui des couches intérieures, enroulées sensiblement circonférentielles résistantes à la pression.

On connait par le document US-4.273.160 un flexible comportant des couches tressées à partir de matériaux de module d'élasticité croissants à partir de couches intérieures vers les couches extérieures. Mais ce tube est flexible et les couches résistent à la fois à la pression et à la traction.

Le document DE-30.08.808 décrit également un tube souple.

Par module d'élasticité circonférentiel d'une couche composite bobinée sur un tube, on entend le module d'élasticité (ou module d'Young) selon une direction tangente à la couche considérée, cette tangente étant située dans un plan perpendiculaire à l'axe du tube.

Les tubes composites comportent généralement une superposition de couches de fibres. Comme cela a déjà été dit dans chaque couche, ces fibres sont disposées suivant des angles égaux ou symétriques par rapport à l'axe du tube et noyées dans une matrice. Cette matrice adhère aux fibres des différentes couches.

On connaît notamment par les brevets US-A-3.107.698, 3.579.402, 4.515.737 et EP-0.244.048 des tubes rigides en matériau composite comportant des couches de fibres de renfort à la pression interne, enrobée dans une matrice et enroulées avec des angles supérieurs à 70 degrés par rapport à l'axe longitudinal. Mais ces tubes ne possèdent pas les couches optimisées vis-à-vis de la pression interne de la présente invention.

L'invention s'applique notamment mais non exclusivement, aux tubes dont les couches, qui résistent seulement, voire complètement, à la traction sont distinctes de celles qui résistent sensiblement, voire complètement, à la pression. La matrice enrobant les fibres des différentes couches forme néanmoins un milieu continu à travers ces fibres. Les couches résistant à la traction comportent des fibres enroulées sous un ou plusieurs angles faibles par rapport à l'axe du tube. De même, les couches résistant à la pression comportent des fibres enroulées sous des angles élevés par rapport à l'axe du tube.

On ne sortira pas du cadre de l'invention en réalisant, au lieu de tube comportant une couche extérieure circonférentielle dont le module d'élasticité circonférentiel est supérieur à celui d'une couche intérieure, une enveloppe résistant à la pression en matériau composite, telle un réservoir, comportant une couche extérieure circonférentielle dont le module d'élasticité circonférentielle est supérieur à celui d'une couche intérieure.

La présente invention propose un tube rigide en matériau composite, résistant à la pression interne, et comportant au moins deux couches de fibres de renfort de pression ou couches de résistance à la pression, enroulées sous un angle au moins égal en valeur absolue à 70°, par rapport à l'axe du tube, les deux couches ayant toutes deux une dilatation radiale sous l'effet de la pression. Ce tube se caractérise notamment en ce que le module d'élasticité circonférentiel de la couche la plus éloignées de l'axe du tube ou couche extérieure est supérieur au module d'élasticité circonférentiel de la couche la plus proche de l'axe du tube ou couche intérieure.

Lorsque le tube comporte une couche intermédiaire de résistance à la pression intercalée entre lesdites couches intérieure et extérieure, le module d'élasticité circonférentiel de la couche intermédiaire pourra être compris entre les modules d'élasticité circonférentiel des couches intérieure et extérieure ou être égal.

De préférence aucune couche composite intermédiaire de résistance à la pression interne située en dessous d'une autre couche intermédiaire de résistance à la pression interne ne pourra avoir un module d'élasticité circonférentiel supérieur à celui de ladite autre couche intermédiaire.

L'angle des couches de renfort de pression pourra être au moins égal à 80°, ou mieux au moins égal à 85°. L'angle de ces couches sera de préférence voisin de 90°.

La couche intérieure de résistance à la pression pourra comporter des fibres de renfort dont le module d'Young longitudinal est voisin de 80 000 MPa, telles des fibres de verre, et la couche extérieure de résistance à la pression pourra comporter des fibres de renfort dont le module d'Young longitudinal est voisin de 140 000 MPa, telles des fibres en Kevlar 49, et le rapport de l'épaisseur de la couche intérieure de résistance à la pression à celle de la couche extérieure de résistance à la pression pourra être compris entre 0,20 et 0,50 ou même 0,60.

La couche intérieure de résistance à la pression pourra comporter des fibres de renfort dont le module d'Young longitudinal est voisin de 140 000 MPa, telles des fibres en Kevlar 49, et la couche extérieure de résistance à la pression pourra comporter des fibres de renfort dont le module d'Young longitudinal est sensiblement compris entre 200 000 et 300 000 MPa, telles des fibres en carbone, et le rapport de l'épaisseur de la couche intérieure de résistance à la pression à celle de la couche extérieure de résistance à la pression pourra être compris dans l'intervalle 0,15-0,30.

Le tube pourra comporter au moins une couche de renfort résistant à la traction.

Les fibres de la couche extérieure de résistance à la pression pourront être précontraintes en traction, en l'absence de pression à l'intérieure du tube.

Le tube pourra également comporter au moins deux couches de fibres de renfort résistant à la traction et distribuées dans l'épaisseur dudit tube.

On pourra utiliser le tube selon l'invention pour la réalisation de tubes dont la pression à l'éclatement est voisine ou supérieure à 100 MPa servant au transfert ou le stockage de fluide.

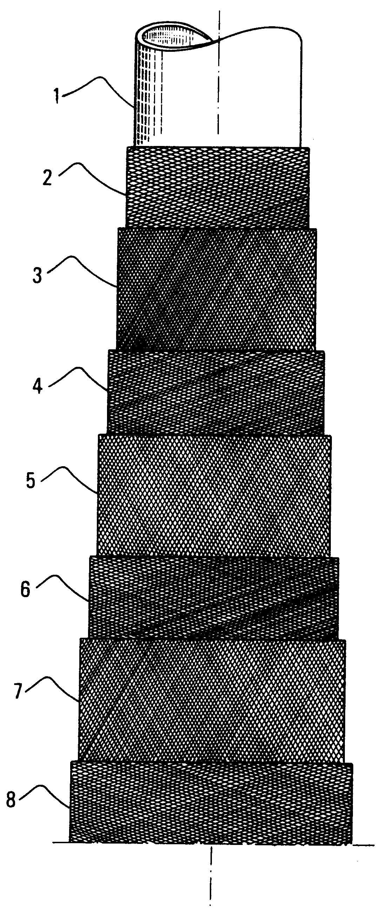

L'invention sera bien comprise et ses avantages apparaîtront clairement à la lecture de la description suivant de quelques exemples de réalisation dont l'un est illustré par la figure annexée représentant un tube en matériau composite auquel s'applique l'invention.

La référence 1 désigne l'enveloppe intérieure du tube. Cette enveloppe étanche peut être en élastomère, en matériau thermoplastique ou thermodurcissable, tel du BUNA, du RILSAN, (qui sont respectivement des marques déposées par HOECHST et de ATO CHEM).

Cette enveloppe pourra également être réalisée en aluminium, titane ou acier. Le module d'élasticité de ces matériaux étant généralement supérieur à celui des couches resistant à la pression interne, ceci signifie que ces types d'enveloppes subissent des déformations plastiques.

Sur l'enveloppe 1 intérieure sont enroulées plusieurs couches 2, 3, 4, 5, 6, 7, 8 de composites. La couche intérieure 2 est réalisée de préférence à partir de fibres bobinées suivant un angle voisin de 90° en valeur absolue, par rapport à l'axe du tube, de manière que cette couche intérieure 2 reprenne essentiellement les efforts de pression dus à la pression régnant à l'intérieur du tube.

La couche 3, qui reprend essentiellement les efforts de traction qui s'exercent suivant l'axe du tube, comporte de fibres enroulées suivant des angles faibles par rapport à l'axe du tube, tels des angles compris entre 0 et 35°, par exemple 20°. La couche 4 est une deuxième couche intérieure de résistance à la pression et est réalisée comme la couche 2 avec le même matériau composite, les fibres étant enroulées comme pour la couche intérieure 2 sous le même angle par rapport à l'axe du tube. De ce fait cette couche 4 présente le même module d'élasticité circonférentiel que la couche 2. On ne sortirait pas du cadre de la présente invention si la couche 4 avait un module d'élasticité circonférentiel supérieur à celui de la couche 2, mais inférieur ou égale à celui des couches qui lui sont extérieures et qui résistent à la pression interne.

La couche 5, comme la couche 3, est une couche resistante aux efforts de traction exercés sur le tube.

La couche intermédiaire de résistance à la pression 6, comporte des fibres de renfort enroulées suivant un angle voisin de 90° par rapport à l'axe du tube. Cette couche intermédiaire 6 peut être réalisée avec un matériau composite différent de celui utilisé pour les couches 2 et 4. Cette différence de matériau composite peut être obtenue, par exemple, en changeant les proportions respectives de matrice et de fibres, ou en changeant la nature des fibres, ou encore en changeant la nature de la matrice. Ce qui importe selon la présente invention c'est que le module d'élasticité circonférentiel de cette couche 6 soit au moins égal à celui des couches de résistance à la pression qui lui sont intérieures et au plus égal à celui des couches de résistance à la pression qui lui sont extérieures.

La couche 7, comme les couches 3 et 5 est adaptée à répendre les efforts de traction exercés sur le tube.

La couche extérieure 8 est réalisée à partir de fibres résistantes bobinées suivant un angle voisin de 90° en valeur absolue, par rapport à l'axe du tube, de manière à reprendre les efforts dus à la pression à l'intérieur du tube. Cette couche extérieure 8 est réalisée avec un matériau composite ayant un module d'élasticité circonférentiel supérieur à celui des couches de résistance à la pression qui lui sont intérieures.

La couche intermédiaire 6 peut avoir un module d'élasticité circonférentiel égal à celui de la couche 4 ou intermédiaire à ceux des couches 4 et 8.

L'invention sera bien comprise à la lecture de l'exemple suivante :

Cet exemple concerne la réalisation d'un tube ayant une pression de service entre 50 et 100 MPa avec un coefficient de sécurité de 2, lui confèrent une pression d'éclatement théorique maximale de l'ordre de 200 MPa. La paroi de ce tube comporte :

– cinq couches en matériaux composites fibre-résine enroulées avec un angle faible par rapport à l'axe du tube et reprenant les efforts de traction; ces couches de matériaux composites sont réparties de manière relativement homogène à l'intérieur de la paroi;

– d'une couche de matériaux composites fibres de verre-résine ayant un angle d'enroulement voisin de 90° par rapport à l'axe du tube, couche étant disposée à partir de l'intérieur du tube;

– d'une couche de matériaux composites fibres de Kevlar-résine ayant un angle d'enroulement voisin de 90, par rapport à l'axe du tube, cette couche étant disposée extérieurement par rapport aux fibres de verre.

A titre indicatif un tel tube pourra avoir un rayon intérieur de 5,3 cm et un rayon extérieur de 7,3 cm (rapport épaisseur/rayon intérieur : 0,38; on rappelle que le phénomène ne dépend que des rapports et non des valeurs absolues). Les couches de composites longitudinaux résistant à la traction représentant une épaisseur cumulée de 0,66 cm et sont régulièrement réparties.

Les couches de composites circonférentiels, c'est-à-dire les couches de résistance à la pression représentent une épaisseur cumulée de 1,34 cm.

Le tableau ci-dessous donne les contraintes maximales circonférentielles et radiales calculées dans les différentes couches de composite verre-résine interne d'une part, et Kevlar-résine externe d'autre part, en fonction de leurs épaisseurs respectives, pour une pression interne de 210 MPa. Ce tableau n'est relatif qu'aux couches de résistance à la pression.

| Epaisseur composite verre / composite Kevlar | contraintes composite verre | | contraintes composites Kevlar | |
|---|---|---|---|---|
| | radiales | circ | radiales | circ |
| 100 % | -210 MPa | 1050 MPa | – | – |
| 73 % | -210 | 960 | - 45 | 900 |
| 60 % | -210 | 927 | - 68 | 923 |
| 48 % | -210 | 895 | - 91 | 953 |
| 36 % | -210 | 867 | - 117 | 1000 |
| 24 % | -210 | 840 | - 144 | 1060 |
| 12 % | -210 | 820 | - 175 | 1144 |
| 0 % | | | - 219 | 1250 |

Le tableau ci-dessus regroupe les contraintes radiales et circonférentielles de la couche composite verre et de la couche composite Kevlar exprimées en MPA. On note donc bien le phénomène suivant : le frettage des couches de verre par des couches externes de Kevlar présentant un module d'élasticité circonférentiel plus important entraine, à épaisseur égale de matériau, une diminution des contraintes maximales, tant dans le verre que dans le Kevlar, et corrélativement une augmentation des contraintes admissibles et de la pression d'éclatement et de service du tube.

D'autre part, les contraintes circonférentielles induites dans les couches Kevlar de résistance à la pression peuvent être plus importantes, compte tenu de ce que les contraintes radiales sont diminuées.

4

Ainsi, si l'on admet, par exemple, que les contraintes maximales admissibles sont les mêmes dans le composite Kevlar et le composite verre, et si l'on prend pour critère de rupture la seule contrainte maximale circonférentielle induite, la proportion optimale se situe de 60 % pour laquelle les contraintes correspondantes dans le composite verre et le composite Kevlar sont identiques. Le gain de performance est alors de l'ordre de 10 % sans avoir changé l'épaisseur du tube.

Si l'on prend comme critère de résistance un critère combiné, la proportion optimale sera plus faible, probablement de l'ordre de 30 à 50 %, avec un gain de performance induit pouvant atteindre 15 à 20 %.

En effet, aux très hautes pressions, le matériau de la paroi doit résister à la traction circonférentielle de lamé et à la compression hydrostatique : à 2 100 bars (21 hbars de contrainte de compression radiale transverse sur le composite), les critères (Tsai-Hill par exemple) indiquent que les caractéristiques en traction dans le sens des fibres sont considérablement réduites. Le frettage permet de décharger considérablement en traction les fibres internes qui reprennent la compression transverse maximale et reportent cette traction sur les fibres externes du matériau plus rigides et moins chargées en compression transverse.

On pourra sans sortir du cadre de l'invention diminuer ou augmenter le nombre de couches résistant à la pression ou à la traction et modifier la répartition de ces couches.

## Revendications

1. - Tube rigide en matériau composite comprenant des fibres enrobées dans une matrice, telle une matière thermoplastique ou thermodurcissable, ladite matrice adhère aux fibres, résistant à la pression interne, et comportant au moins deux couches de fibres enrobées de renfort de pression, ou couches de résistance à la pression, enroulées sous un angle au moins égal en valeur absolue à 70°, par rapport à l'axe du tube, ces couches ayant toutes une dilatation radiale sous l'effet de la pression, caractérisé en ce que le module d'élasticité circonférentiel de la couche la plus éloignée de l'axe du tube ou couche extérieure est supérieur au module d'élasticité circonférentiel de la couche la plus proche de l'axe du tube ou couche intérieure.

2. - Tube selon la revendication 1, comportant au moins une couche intermédiaire de renfort de pression intercalée entre lesdites couches intérieure et extérieure, caractérisé en ce que le module d'élasticité circonférentiel de la couche intermédiaire est compris entre les modules d'élasticité circonférentiels desdites couches intérieure et extérieure.

3. - Tube selon l'une des revendications 1 et 2, caractérisé en ce qu'aucune couche intermédiaire de résistance à la pression en dessous d'une autre couche intermédiaire de résistance à la pression n'a un module d'élasticité circonférentiel supérieur à celui de ladite autre couche intermédiaire.

4. - Tube selon l'une des revendications 1 à 3, caractérisé en ce que ledit angle est au moins égal à 80° et, de préférence, proche de 90°.

5. - Tube selon l'une des revendications 1 à 4, caractérisé en ce que ladite couche intérieure de résistance à la pression comporte des fibres de renfort dont le module d'Young longitudinal est voisin 800 000 MPa telles des fibres en verre, et ladite couche extérieure de résistance à la pression comporte des fibres de renfort dont le module d'Young longitudinal est voisin de 140 000 MPa, telles des fibres en Kevlar 49, et en ce que le rapport de l'épaisseur de la couche intérieure à celle de la couche extérieure est compris dans l'intervalle 0,20-0,60 et de préférence 0,20-0,50.

6. - Tube selon l'une des revendications 1 à 4, caractérisé en ce que ladite couche intérieure de résistance à la pression comporte des fibres de renfort dont le module d'Young longitudinal est voisin de 140 000 MPa, telles des fibres en Kevlar 49, et ladite couche extérieure comporte des fibres de renfort dont le module d'Young longitudinal est sensiblement compris entre 200 000 et 300 000 MPa, telles des fibres en carbone, et en ce que le rapport de l'épaisseur de la couche intérieure de résistance à la pression à celle de la couche extérieure de résistance à la pression est compris dans l'intervalle 0,15-0,30.

7. - Tube selon l'une des revendications 1 à 5, caractérisé en ce qu'il comporte au moins une couche de fibres de renfort résistant à la traction.

8. - Tube selon l'une des revendications 1 à 7, caractérisé en ce que les fibres de la couche extérieure de résistance à la pression sont précontraintes en traction, en l'absence de pression à l'intérieur du tube.

9. - Tube selon l'une des revendications 1 à 8, caractérisé en ce qu'il comporte au moins deux couches de fibres de renfort résistant à la traction et réparties dans l'épaisseur dudit tube.

10. - Application du tube selon l'une des revendications 1 à 10 pour la réalisation de tube dont la pression à l'éclatement est voisine ou supérieure à 100 MPa, servant au transfert ou au stockage de fluides.

**Patentansprüche**

1. Steifes Rohr aus einem Verbundmaterial, das Fasern enthält, die in eine Matrix aus beispielsweise einem thermoplastischen oder wärmehärtbaren Material eingebettet sind, die an den Fasern haftet, das gegen Innendruck beständig ist und mindestens zwei Schichten aus eingebetteten Druckverstärkungsfasern oder druckbeständige Schichten aufweist, die unter einem Winkel mit einem absoluten Wert von mindestens 70°, bezogen auf die Achse des Rohres, um dieses herumgewickelt sind, wobei alle diese Schichten eine radiale Dilatation unter dem Einfluß des Druckes aufweisen, dadurch gekennzeichnet, daß der Umfangs-Elastizitätsmodul der von der Rohrachse am weitesten entfernten Schicht oder äußeren Schicht höher ist als der Umfangs-Elastizitätsmodul der der Rohrachse am nächsten liegenden Schicht oder inneren Schicht.

2. Rohr nach Anspruch 1, das mindestens eine zwischen der inneren Schicht und der äußeren Schicht angeorndete Druckverstärkungs-Zwischenschicht aufweist, dadurch gekennzeichnet, daß der Umfangs-Elastizitätsmodul der Zwischenschicht zwischen den Umfangs-Elastizitätsmodulen der inneren Schicht und der äußeren Schicht liegt.

3. Rohr nach einem der Ansprüche 1 und 2, dadurch gekennzeichnet, daß keine druckbeständige Zwischenschicht unter einer anderen druckbeständigen Zwischenschicht einen Umfangs-Elastizitätsmodul aufweist, der höher ist als derjenige der anderen Zwischenschicht.

4. Rohr nach einem der Ansprüche 1 bis 3, dadurch gekennzeichnet, daß der Winkel mindestens 80° beträgt und vorzugsweise nahe bei 90° liegt.

5. Rohr nach einem der Ansprüche 1 bis 4, dadurch gekennzeichnet, daß die druckbeständige innere Schicht Verstärkungsfasern enthält, deren Longitudinal-Young-Modul in der nähe von 80 000 MPa liegt, wie Glasfasern, und daß die druckbeständige äußere Schicht Verstärkungsfasern enthält, deren Longitudinal-Young-Modul in der nähe von 140 000 MPa liegt, wie Kevlar 49-Fasern, und daß das Dickenverhältnis zwischen der inneren Schicht und der äußeren Schicht in dem Bereich von 0,20 bis 0,60, vorzugsweise von 0,20 bis 0,50, liegt.

6. Rohr nach einem der Ansprüche 1 bis 4, dadurch gekennzeichnet, daß die druckbeständige innere Schicht Verstärkungsfasern enthält, deren Longitudinal-Young-Modul nahe bei 140 000 MPa liegt, wie Kevlar 49-Fasern, und daß die äußere Schicht Verstärkungsfasern enthält, deren Longitudinal-Young-Modul im wesentlichen zwischen 200 000 und 300 000 MPa liegt, wie Kohlefasern, und daß das Verhältnis zwischen der Dicke der druckbeständigen inneren Schicht und der Dicke der druckbeständigen äußeren Schicht in dem Bereich von 0,15 bis 0,30 liegt.

7. Rohr nach einem der Ansprüche 1 bis 5, dadurch gekennzeichnet, daß es mindestens eine Schicht aus gegen Zug beständigen Verstärkungsfasern aufweist.

8. Rohr nach einem der Ansprüche 1 bis 7, dadurch gekennzeichnet, daß die Fasern der äußeren druckbeständigen Schicht auf Zug vorgespannt sind in Abwesenheit eines Druckes im Innern des Rohres.

9. Rohr nach einem der Ansprüche 1 bis 8, dadurch gekennzeichnet, daß es mindestens zwei Schichten aus gegen Zug beständigen Verstärkungsfasern aufweist, die über die Dicke des Rohres verteilt sind.

10. Verwendung des Rohres nach einem der Ansprüche 1 bis 10 zur Herstellung eines Rohres, bei dem der Berstdruck in der Nähe von oder oberhalb von 100 MPa liegt, das dem Transport oder der Lagerung (Speicherung) von Fluids bzw. Flüssigkeiten dient.

**Claims**

1) A rigid pipe made of a composite material comprising fibers coated with a matrix, such as a thermoplastic or thermosetting material, said matrix adhering to the fibers, withstanding the internal pressure, and comprising at least two layers of coated, pressure-reinforcing fibers, or pressure-resistant layers, wound at an angle at least equal in absolute value to 70°, with respect to the axis of the pipe, all these layers undergoing radial expansion under the effect of pressure, wherein the circumferential modulus of elasticity of the layer which is the furthest from the axis of the pipe or outer layer is higher than the circumferential modulus of elasticity of the layer which is the closest to the axis of the pipe or inner layer.

2) A pipe as claimed in claim 1, comprising at least one intermediate pressure-reinforcing layer interposed between said inner and outer layers, wherein the circumferential modulus of elasticity of the intermediate layer ranges between the circumferential moduli of elasticity of said inner and outer layers.

3) A pipe as claimed in any one of claims 1 and 2, wherein no intermediate pressure-resistant layer below another intermediate pressure-resistant layer has a circumferential modulus of elasticity higher than that of said other intermediate layer.

4) A pipe as claimed in any one of claims 1 to 3, wherein said angle is at least equal to 80°, and preferably close to 90°.

5) A pipe as claimed in any one of claims 1 to 4, wherein said pressure-resistant inner layer comprises reinforcing fibers whose longitudinal Young's modulus is close to 80 000 MPa, such as glass fibers, and said pressure-resistant outer layer comprises reinforcing fibers whose longitudinal Young's modulus is close to 140 000 MPa, such as Kevlar 49 fibers, and wherein the ratio of the thickness of the inner layer to that of the outer layer is in the 0.20-0.60 range and preferably in the 0.20-0.50 range.

6) A pipe as claimed in any one of claims 1 to 4, wherein said pressure-resistant inner layer comprises reinforcing fibers whose longitudinal Young's modulus is close to 140 000 MPa, such as Kevlar 49 fibers, and said pressure-resistant outer layer comprises reinforcing fibers whose longitudinal Young's modulus substantially ranges between 200 000 and 300 000 MPa, such as carbon fibers, and wherein the ratio of the thickness of the pressure-resistant inner layer to that of the pressure-resistant outer layer is in the 0.15-0.30 range.

7) A pipe as claimed in any one of claims 1 to 5, comprising at least one layer of reinforcing fibers withstanding tensile stresses.

8) A pipe as claimed in any one of claims 1 to 7, wherein the fibers of the pressure-resistant outer layer are subjected to a tensile prestress in the absence of pressure inside the pipe.

9) A pipe as claimed in any one of claims 1 to 8, comprising at least two layers of reinforcing fibers withstanding tensile stress and distributed in the thickness of said pipe.

10) Application of the pipe as claimed in any one of claims 1 to 9 for forming pipes whose bursting pressure is close to or higher than 100 MPa and which are used for transferring or storing fluids.